# EUROPÄISCHE PATENTSCHRIFT

(11) **EP 0 905 353 B1**
(45) Veröffentlichungstag und Bekanntmachung des Hinweises auf die Patenterteilung: **15.01.2003**
(21) Anmeldenummer: 97810718.3
(22) Anmeldetag: 30.09.1997
(51) Int. Cl.: F01D 5/18

(54) **Prallanordnung für ein konvektives Kühl- oder Heizverfahren**
Impingement arrangement for a convective cooling or heating process
Ensemble des jets d'air pour un procédé de chauffage ou de refroidissement par convection

(43) Veröffentlichungstag der Anmeldung: 31.03.1999
(73) Patentinhaber: ALSTOM (Switzerland) Ltd, 5401 Baden (CH)
(72) Erfinder: Hausladen,Josef, 80637 München (DE); Höcker, Rainer, Dr., 79961Waldshut (DE)

(56) Entgegenhaltungen:
- EP-A- 0 694 739
- EP-A- 0 698 725
- GB-A- 849 255
- US-A- 5 321 951

## Beschreibung

### Technisches Gebiet

Die Erfindung bezieht sich auf eine *Prallanordnung für ein konvektives Kühl- oder Heizverfahren* gemäss Oberbegriff des Patentanspruchs 1.

Unter den konvektiven Kühl- und Heizverfahren können mit Prallkühlung respektive Prallheizung die höchsten Wärmeübergangszahlen erreicht werden. Realisiert wird die Prallströmung dadurch, dass ein Kühl- oder Heizfluid (z.B. Luft, Wasser, Wasserdampf, Wasserstoff. flüsiges Natrium usw.) durch eine oder mehrere Öffnungen in einer Wand strömt und mehr oder weniger senkrecht auf eine gegenüberliegende Fläche aufprallt. Beim Auftreffen auf die Prallfläche werden die Freistrahlen umgelenkt und es bildet sich eine Strömung parallel zur Prallfläche, wodurch ein hoher Wärmeübergang zwischen Strömung und Wand erzielt wird. Zur Vergrösserung der wärmeübertragenden Fläche ist es bekannt, diese mit Rauhigkeitselementen, meistens in Form von Rippen, zu versehen.

### Stand der Technik

Eine Prallkühlung der eingangs genannten Art ist bekannt aus der *GB 849255. Die dort dargestellte Methode zeichnet sich durch eine Mehrzahl von Prallrohren* *aus, die mit ihrer Mündung gegen* das zu *kühlende Wandteil gerichtet sind, wobei der Träger mit Abstand zum Wandteil angeordnet ist. Zur Erhöhung der Kühlwirkung ist die zu kühlende Wand mit einer Mehrzahl zylindrischer Kühltaschen ausgerüstet, in die je ein Prallstrahl gerichtet ist.*
*Eine derartige Wandkonfiguration mit scharfen Kanten und kleinen Radien hat eine ungleichmässige Kühlwirkung zur Folge und ungünstige Strömungsverhältnisse zur Folge. Ausserhalb der zylindrischen Taschen sinkt der Wärmeübergang erheblich ab. Eine inhomogene Temperaturverteilung auf der heissen Wandseite ist die Folge.*

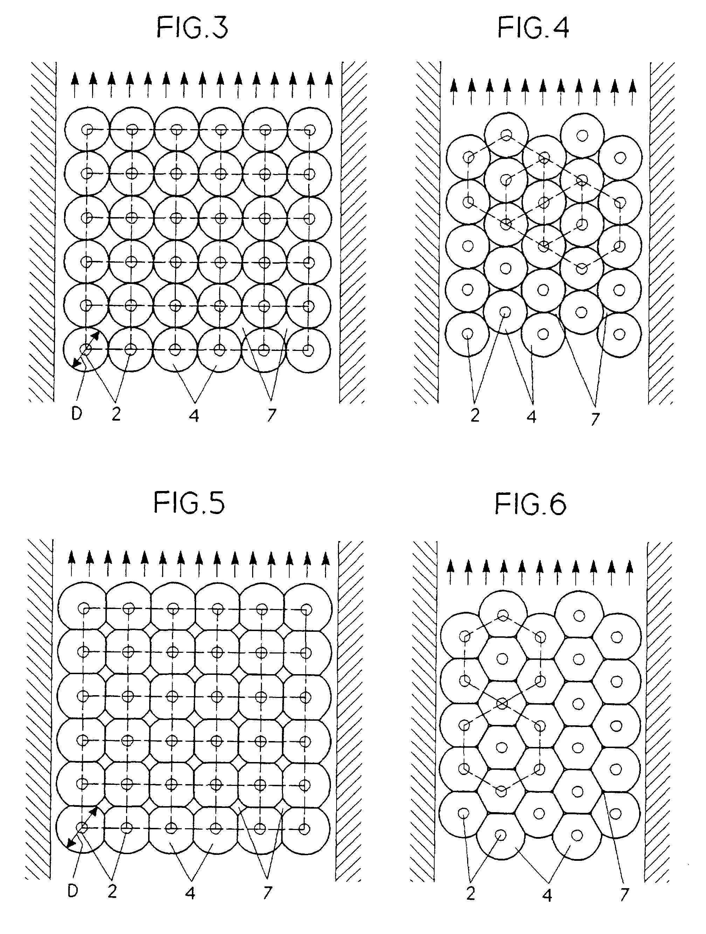

*Gemäss* DE-A1 44 30 302 *ist die von den Prallstrahlen beaufschlagte Wand als* Relief mit vorstehenden Buckeln ausgebildet, wobei die Strahlen direkt auf die hervorstehende Buckel auftreffen (Fig.3). Damit soll die inhomogene Wärmeübertragung in den Prallstrahlen ausgeglichen und eine homogene Temperaturverteilung auf der heissen Seite der Wand erzielt werden. Die Buckel sind bei dieser Anordnung im wesentlichen als Zylinder ausgebildet mit herstellungsbedingt abgerundeten Kanten. Bei einem weiteren Ausführungsbeispiel (Fig.4) liegt das Relief in Fom von Rippen vor.
Beide Geometrien haben in Bezug auf den Wärmeübergang keine vorteilhaften thermischen Randbedingungen. Die Wärme, die über die Oberfläche eines aus der zu kühlenden Wand hervorstehenden Elementes abgegeben werden kann, muss zunächst einmal durch dessen Grundfläche und das Material an die Oberfläche geleitet werden. Dadurch stellt sich im Material des Elementes eine Temperaturschichtung ein. Diese kann je nach Material und Geometrie dazu führen, dass an den am weitesten von der Basis des Elementes entfernten Stellen die Temperaturdifferenz zwischen Fluid und Element so klein wird, dass praktisch keine Wärmeübertagung mehr stattfindet.

*Zur Vermeidung dieser Nachteile ist in der prioritätsälteren Anmeldung EP 0 889 201 angeregt worden, eine solche Prallanordnung derartig zu konfigurieren, dass die Prallstrahlen stets zwischen die buckelförmigen Rauhigkeitselemente gerichtet* *sind, und die bildende Kurve dieser hervorstehenden Buckel die Kontur eines Rotationsparaboloiden einnimmt. Eine solche Konfiguration gewährleistet eine hohe thermische Wirksamkeit der auf die Wand auftreffenden Prallstrahlen in mehrfacher Hinsicht; zum einen liegt im Auftreffbereich der Strahlen ein hoher Wärmeübergang vor, zum anderen sorgt eine ungehinderte Abströmung des Prallmediums über die strömungsoptimierte Buckelfläche für sehr hohe Wärmeübergangswerte.*
*Die Rauhigkeitselemente sind entweder auf die zu kühlende Wand aufgesetzt oder als einheitliches Gussteil ausgeführt. Im letzteren Falle wird die günstige Geometrie dieser Struktur durch einen erhöhten Herstellungsaufwand erkauft.*

Des weiteren sind umfangreiche Untersuchungen zu lokalen Wärmeübergangszahlen von Einzel-Prallstrahlen und Feldern von Prallstrahlen auf ebene Oberflächen sowie auf einfach gekrümmte Oberflächen bekannt.

*Schliesslich ist es im Gebiet der Turbomaschinen aus Untersuchungen zur Kühlung von gekrümmten Schaufelvorderkanten an sich bekannt, die dem Prallstrahl zugekehrte Seite der Wand als Wanne auszubilden,* wobei *ein Prallstrahl senkrecht auf den Wannenboden auftrifft. Jedoch haben* diese *bekannten Wandteile eine gleichbleibende Wandstärke,* so es *sich letztlich um das gleiche Prinzip handelt, wie die Prallkühlung einer Wand mit beidseitig ebenen Flächen.*

### Darstellung der Erfindung

Der Erfindung liegt die Aufgabe zugrunde, eine Prallanordnung zu schaffen, bei welcher die Rauhigkeitselemente bezüglich des Herstellungsprozesses und der thermischen Wirksamkeit optimiert sind. Ausgehend von den oben erwähnten Lösungsvorschlägen des Standes der Technik soll dies durch Schaffung einer neuen Geometrie der Reliefstruktur erreicht werden.

Erfindungsgemäss wird dies bei einer Prallanordnung der eingangs genannten Art mit den kennzeichenden Merkmalen des Patentanspruchs 1 erreicht. Günstige Weiterbildungen der Erfindung ergeben sich aus den Unteransprüchen.

Die Vorteile der neuen Massnahme sind unter anderem darin zu sehen, dass infolge der nahezu isothermen Oberfläche eine hohe Pin-Effektivität erzielt wird und dass auch an den nicht parallel zur mit den Prallstrahlen zu beaufschlagenden Wand gerichteten Flächen ein hoher Wärmeübergang vorliegt. Darüber hinaus ist wegen des Fehlens von scharfen Kanten und kleinen Radien mit einer einfachen und kostengünstigen Fertigung zu rechnen. Die Geometrie ist leicht auszuformen und damit gut giessbar; sie ist fehlertolerant und gestattet grosse Masstoleranzen. Infolge der Symmetrie der Wannen ist deren Anordnung unabhängig von der Anströmung durch das umgelenkte Prallmittel. Schliesslich haben die neuen Wannen auch niedrige Druckverluste zur Folge.

Zudem können die Stege zwischen den Wannen mit Abstandshaltern zur strahlerzeugenden Platte versehen werden oder je nach Ausbildung dieser Platte sogar direkt als Abstandshalter benutzt werden, wenn die Platte auf den Stegen aufliegt.

Schliesslich werden durch die neue Massnahme neben einer Optimierung der thermischen auch die mechanischen Eigenschaften der zu kühlenden Wand verbessert.

### Kurze Beschreibung der Zeichnung

In der Zeichnung sind mehrere Ausführungsbeispiele der Erfindung vereinfacht dargestellt. Es zeigen:
- Fig. 1: einen Längsschnitt durch eine Prallströmungs-Anordnung;
- Fig. 2a-c: verschiedene Wannen-Geometrien
- Fig. 3: eine Vierer-Anordnung von Wannen;
- Fig. 4: eine verschachtelte Sechser-Anordnung von Wannen;
- Fig. 5: eine Variante der Vierer-Anordnung nach Fig.3;
- Fig. 6: eine Variante der Sechser-Anordnung nach Fig.4;
- Fig. 7: eine prallgekühlte Gasturbinenschaufel;
- Fig. 8: ein Ausführungsbeispiel mit Prallrohren statt Prallöffnungen.
- Fig. 9: ein Ausführungsbeispiel mit strukturiertem Träger.

Es sind nur die für das Verständnis der Erfindung wesentlichen Elemente gezeigt. In den verschiedenen Figuren sind die funktionsgleichen Elemente mit denselben Bezugszeichen versehen. Die Strömungsrichtung der Medien sind mit Pfeilen bezeichnet.

### Weg zur Ausführung der Erfindung

Nachstehend wird die Prallströmung als Prallkühlung bezeichnet, wie sie beispielsweise zur Kühlung von umströmten heissen Turbomaschinen-Komponenten wie Gasturbinenschaufeln oder Brennkammerwandungen Anwendung finden kann.

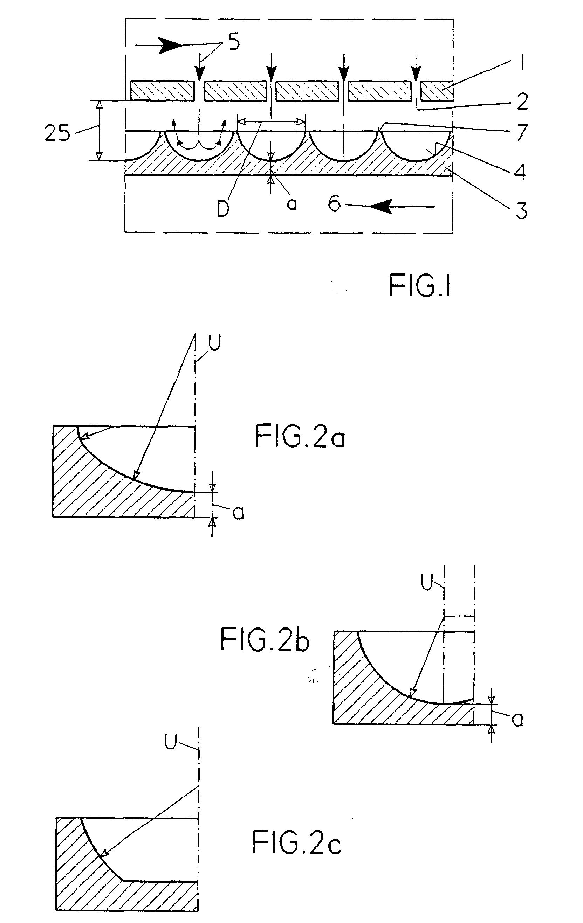

In Fig. 1 ist das beispielsweise mittels Kühlluft 5 zu kühlende Wandteil mit 3 bezeichnet. Es handelt sich hier um eine ebene Wand, welche auf der Aussenseite von einem durch die Pfeile 6 bezeichneten heissen Medium umströmt wird. Entsprechend eben ist auch der kühlluftseitige Träger 1 ausgebildet. Er ist im gezeigten Fall mit gleichbleibendem Abstand 20 mittels geeigneter, nicht dargestellter Mittel mit der Wand 3 befestigt. Der Träger weist eine Mehrzahl von Prallöffnungen 2 auf und kann als einfaches Lochblech konzipiert sein.

Auf der Innenseite ist die zu kühlende Wand 3 mit einer Anzahl nebeneinanderangeordneter Wannen 4 versehen. Diese Wannen weisen im Beipielsfall die Form von Kalotten auf. Der Abstand der Wannen zueinander ist so gewählt, dass sich ein schmaler Steg 7 zwischen den benachbarten Wannen-Wandungen ergibt. Gegenüber einer ebenen Ausbildung hat die kalottenförmige Konfiguration der zu kühlenden Wand eine beträchtliche Vergrösserung der wärmeübertragenden Fläche und damit des Wärmestromes zur Folge.

Die dem Prallstrahl abgekehrte Seite des Wandteiles 3 ist im Beipielsfall eben ausgebildet. Es versteht sich, dass diese dem Prallstrahl abgekehrte Seite genau so gut mit einer Krümmung versehen sein kann, wobei der Krümmungsradius dann jedoch sehr viel grösser sein sollte als jener der Kalotte.

Das zu kühlende Wandteil ist mitsamt Wannen vorzugsweise einteilig vergossen. Unabhängig vom Herstellungsprozess ergibt sich ein Gebilde von hoher Festigkeit. Die strukturierte von den Prallstrahlen beaufschlagte Fläche trägt - bezogen auf die Grundstärke a der Wand 3 - massgeblich zur Steifigkeit des Gesamtsystems bei. Dies kann einerseits zu einer vorteilhaften Reduzierung der Grundwandstärke a führen, wenn eine möglichst geringe Masse des Systems gefordert ist. Oder aber andererseits kann bei Beibehaltung der Grundstärke a und konstanter mechanischer Beanspruchung die Fluidtemperatur auf der heissen Seite entsprechend erhöht werden. Schliesslich ist bei Beibehaltung der Grundstärke a und der Temperatur des heissen Fluids durch die neue Massnahme mit einer Verlängerung der Haltbarkeit des Systems zu rechnen.

Je Wanne ist ein Prallstrahl vorgesehen, wobei dieser aus der Prallöffnung 2 austretende Prallstrahl in der Regel zumindest annähernd senkrecht auf den Wannenboden auftrifft. Beim Auftreffen wird der Prallstrahl auf die übrige Prallfläche, d.h. die Wände der Wanne, umgelenkt. Das beim Umströmen der Kalotte erwärmte Kühlmittel strömt danach in den Freiraum zwischen Träger und Wandteil ab, wobei die sich einstellende Querströmung auch noch zur Kühlung der Stege 7 beiträgt.

In Fig. 2 sind verschiedene weiter mögliche Geometrien von Wannen erläutert. Da es sich um symmetrisch aufgebaute Elemente handelt, ist jeweils nur eine Wannenhälfte dargestellt.

Statt der Kalotte nach Fig. 1, zu dessen Erzeugung ein Kreis um seinen Durchmesser gedreht wird, zeigt Fig. 2a eine Ellipsenform. Wie bei der Kugelkalotte wird auch diese Form durch Rotation des entsprechenden Ausschnittes um die Achse U erzeugt.

Fig. 2b zeigt eine einer verkürzten Zykloide angenäherte Form, die durch Rotation des entsprechenden Ausschnittes um eine gegenüber der Prallstrahlachse parallel versetzte Achse U erzeugt wurde. Es versteht sich, dass bei dieser Form der Prallstrahl zur vollen Wirksamkeit genau auf den Wendepunkt auftreffen muss.

Fig. 2c schliesslich zeigt eine trapezförmige Wanne mit ebenem Boden, deren Wandungen gerade oder gekrümmt (wie dargestellt) ausgeführt sein können.

Unabhängig von der gewählten Wannen-Geometrie entsteht im Verbund eine wabenförmige Struktur, deren Einzelelementen jeweils ein Freistrahl zugeordnet ist. Dieser ist so positioniert, dass sein Kern unter den gegebenen Randbedingungen - u.a. dem Querstrom des abströmenden Kühlmediiums von benachbarten Elementen - einen Staupunkt im unteren Bodenbereich der Wannen bewirkt. Dabei kann die Achslage des Freistrahles von der Drehachse des Rotationskörpers abweichen.

Die jeweils zu wählende Geometrie soll den Wärmestrom derart beeinflussen, dass die Oberflächentemperatur mit zunehmendem Abstand von der Basis nur unwesentlich abnimmt und somit ein nahezu konstanter Wärmestrom durch die gesamte Oberfläche fliessen kann.

Da infolge dieser Geometrie überall eine ausreichende Temperaturdifferenz gewährleistet ist, kann die gesamte Oberflläche Wärme übertragen. Darüberhinaus ist der Wärmeübergangskoeffizient auf der Oberfläche etwa gleich demjenigen, der auf der Basisfläche ohne die Wanne vorherrschen würde. Dies wiederum im Gegensatz zu den bekannten Elementen mit senkrecht zur Wand verlaufenden Flächen, bei denen mit erheblich reduziertem Wärmeübergangskoeffizient zu rechnen ist.

Aufgrund der neuen Geometrie der Wannen sind nun mehrere unterschiedliche Anordnungsmöglichkeiten gegeben, die in Funktion des gewünschten Wärmeübertragung und/oder der tolerierbaren Druckverluste auszuwählen sind.

Bezogen auf die Querströmung im Bereich der Basis lassen sich grundsätzlich zwei Anordnungen unterscheiden.

Die Prallöffnungen 2 und die Wannen 4 können im Verbund entweder in Reihe angeordnet sein gemäss Fig. 3 oder sie können gegeneinander versetzt sein, beispielsweise um eine halbe Teilung gemäss Fig. 4. Daraus resultieren Anordnungen, die entweder quadratisch oder sechseckig sind, wie die gestrichelten Linien in den Fig. 3 resp. 4 zeigen.

Vorzugsweise werden die Wannen 4 an den Kreuzungspunkten dieser gestrichelten Linen angeordnet. Wie Fig. 3 zeigt, sind in der Reihenanordnung direkt benachbarte Wannen ohne Zwischenräume, d.h. ohne Stege angeordnet. Dennoch werden bei dieser Ausführung in der Mitte von jeweils 4 Wannen relativ grosse Stege 7gebildet. Auf diesen Stegen können Abstandhalter zum Träger vorgesehen sein, wobei diese Abstandhalter auch integral mit der Wand 3 vergossen sein können.

In der versetzten Anordnung nach Fig. 4 sind sechs symmetrische Elemente mit einer danebenliegenden Sechseranordnung ineinanderverschachtelt. Hier ist zu erkennen, dass bei gleicher Wannengrösse die Oberfläche gegenüber der Anordnung nach Fig. 3 insofern vergrössert wird , als die nunmehr zwischen je drei Wannen gebildeten Stege bedeutend kleinere Ausmasse annehmen.

Die Anordnung nach Fig. 5 entspricht in ihrer Geometrie jener der Fig. 3. Die Grösse und der gegenseitige Abstand der Prallöffnungen 2 sind gleich gewählt. Hingegen wurde der Durchmesser D der Wannen vergrössert, was zu einer Verschneidung benachbarter Wannen und zu kleineren Stegen 7 führt. Diese Lösung kann fertigungsbedingte Vorteile aufweisen und kann je nach Wahl des Durchmessers zu flacheren Wannen führen.

Die Anordnung nach Fig. 6 entspricht in ihrer Geometrie jener der Fig. 4. Die Grösse und der gegenseitige Abstand der Prallöffnungen 2 sind wiederum gleich gewählt. Hingegen wurde der Durchmesser D der Wannen vergrössert, was zu einer Verschneidung benachbarter Wannen und zu extrem kleinen Stegen führt. Man erkennt hier, dass ab einem gewissen Wannen-Durchmesser überhaupt keine Stege mehr gebildet werden.

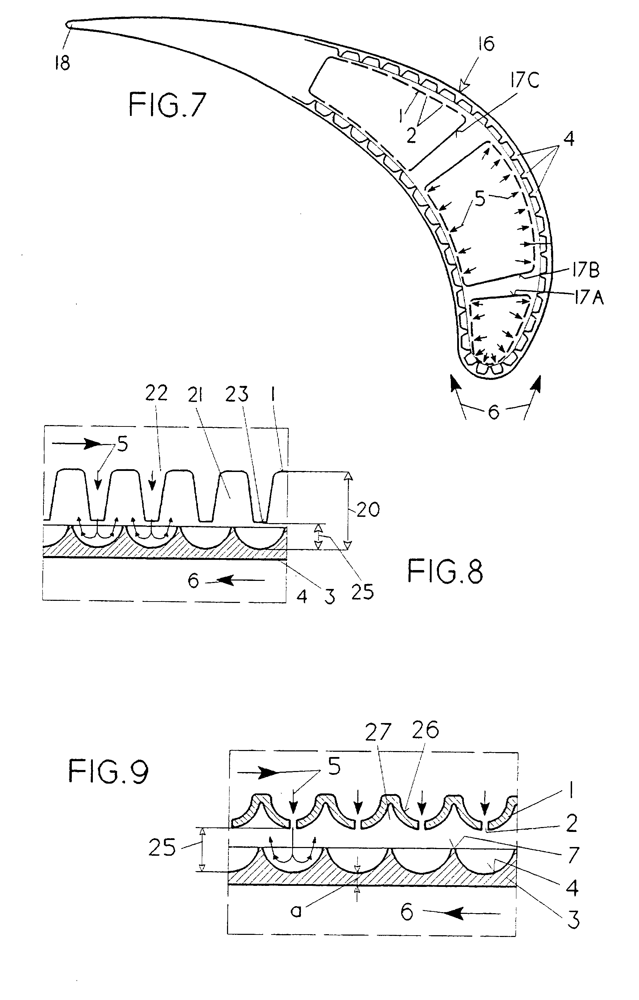

In Fig. 7 ist als Beispiel eines zu kühlenden Bauteils eine Gasturbinenschaufel 16 gezeigt. Die Träger mit den Prallöffnungen 2 sind als mehr oder weniger rohrförmige Einsätze 17A, 17B und 17C konzipiert und im hohlen Inneren der Schaufel angeordnet. Diese Einsätze sowie die mit den Wannen 4 versehene Schaufelwand können als Gussteil ausgeführt sein. Sie können desgleichen als drucktragenes Gebilde ausgestaltet sein für Innendrücke, die bis zum Doppelten des in der eigentlichen Prallzone herrschenden Druckes betragen können.

Im Falle einer Leitschaufel erfolgt die Einströmung des Kühlmittels in die Einsätze in der Regel vom Schaufelfuss her gegen die Schaufelspitze hin. Die Prallöffnungen 2 und die Wannen 4 sind über die Schaufelhöhe und den Schaufelumfang in erforderlichem Abstand zueinander gestaffelt. die Einsätze 17A-C können vom Kühlmittel einzeln oder in Serie durchströmt werden.

Das gas- oder dampfförmige Kühlmedium kann in den mehreren Einsätzen im geschlossenen Kreis zirkuliert werden, d.h. es wird nach vollzogener Kühlung wieder über den Schaufelfuss abgezogen. Das von den gekühlten Wandteilen abströmende Kühlmedium kann jedoch aus der Schaufel heraus in den Strömungskanal austreten. Dies geschieht vorzugsweise an jener Stelle der Schaufel, an welcher der tiefste Aussendruck vorherrscht. In der Regel wird man das Kühlmittel somit an der Hinterkante 18 der Schaufel austreten lassen.

Fig. 8 zeigt ein Ausführungsbeispiel, bei welchem derTräger ebenfalls flächenförmig ist und mit einer Vielzahl, hier äquidistanter und in Reihen angeordneter Prallrohre 21 versehen ist. Deren Einlauf 22 entspricht einer Prallöffnung und ist bündig mit der Trägeroberfläche. Die Prallrohre weisen einen konischen Innenkanal mit stetiger Verengung in Strömungsrichtung auf. Der engste Querschnitt der Prallrohre liegt damit an der Mündung 23. Mit ihrer Mündung 23 sind die Prallrohre senkrecht gegen das zu kühlende Wandteil gerichtet. Die Mündung befindet sich im Prallabstand 25 zur Wand. Im Beispielsfall beträgt das Verhältnis dieses Prallabstandes zum engsten Durchmesser der Prallrohre etwa 1. Es ist ersichtlich, dass die nach dem Aufprall abgelenkte Kühlluft in die freien Zwischenräume 21 zwischen den Prallrohren abströmen kann, ohne dabei benachbarte Prallstrahlen zu stören. Das lichffreie Mass des Zwischenraumes ist bei senkrechter Ausrichtung der Prallrohre durch deren Länge gegeben. Im Gegensatz zu den Kühlluftstrahlen, die über ein Lochblech erzeugt werden bietet diese Lösung den Vorteil der freien Gestaltung des Verhältnisses von Strahlabstand zum Strahldurchmesser welches sich durchaus über einen Bereich von 0.1 bis 4 erstrecken kann.

Bisher wurden die Wannen stets als rotationssymmetrische Körper betrachtet, die durch Drehen des entsprechenden Abschnittes um 360° entstanden sind. In Abweichung hierzu ist es selbstverständlich auch möglich, die Wannen rinnenförmig zu gestalten, wobei allerdings die Oberflächenvergrösserung etwas kleiner ausfällt als mit rotationssymmetrischen Wannen. Zur Erzeugung einer Rinne wird der entsprechende Abschnitt nicht um eine Achse U gedreht, sondern längs einer vorzugsweise geraden Achse U verschoben. Hierdurch entstehen an der zu kühlenden Fläche Längsrinnen mit Kreis-, Ellipsen- oder Trapezform. Bei dieser Konfiguration tritt der Stabilisierungseffet der oberflächenvergrössernden Struktur in einer definierten Richtung auf. Die Prallstrahlen sollen bei dieser Lösung ebenfalls auf den Grund der Rinne auftreffen. Man wird hier eine gewisse Anzahl Prallstrahlen in der Längserstreckung der Rinne vorsehen, wobei der zu wählenden Teilung der Prallstrahlen je nach der erforderlichen Kühlleistung Aufmerksamkeit zu schenken ist. Dabei hat es sich gezeigt, dass eine - beispielsweise fertigungsbedingte - fehlerhafte Anordnung der Prallstrahlen nur einen unwesentlichen Einfluss auf die Wirksamkeit des Gesamtsystemes hat.

Wie bereits oben erwähnt, ist der einfachste Fall für den Träger 1 eine ebene Lochplatte. Gemäss Fig. 9 kann jedoch auch eine Lochplatte mit kalottenartigen Senken 26 zur Anwendung gelangen. Die Senken enthalten jeweils die Prallöffnungen 2, wobei erkennbar ist, dass mit dieser Lösung ein einfaches Mittel gegeben ist, den Prallabstand 25 zu beeinflussen. Für den Fall, dass die Wannen rinnenförmig ausgebildet sind, bietet es sich an, auch die Senken 26 als Rinnen zu gestalten. Diese müssen nicht notwendigerweise in der gleichen Richtung verlaufen wie die Wannen. Sie können beliebig in einem Winkel zwischen 0° und 90° zur Wannenrichtung oder zur Richtung des Kühlstromes 6 verlaufen. Die zwischen den Senken vorhandenen Zwischenräume 27 können dadurch zur gezielten Abfuhr des Kühlmediums benutzt werden. Darüberhinaus bietet der unterschiedliche Richtungsverlauf die Möglichkeit, die rinnenförmige Senke 26 direkt auf den Stegen 7 der Wanne abzustützen (nicht dargestellt).

Selbstverständlich ist die Erfindung nicht auf die gezeigten und beschriebenen Beispiele beschränkt. Es versteht sich, dass je nach Erfordernissen die Anzahl und Teilung der Prallöffnungen 2 oder -rohre 21, sowie Länge und Form der letzteren, fallweise optimiert werden können. Auch in der Wahl des Kühlmittels, dessen Druckes und dessen Weiterverwendung nach der Kühltätigkeit setzt die Erfindung keine Schranken.

Schliesslich wird der Fachmann erkennen, dass die Erfindung nicht nur zum Zweck der Kühlung von Wandteilen von Maschinen, Apparaten oder allgemein Anlagen angewendet werden kann, sondern genau so gut zu deren Heizung. Beispiele für eine solche Anwendung des flächigen Heizens bilden z.B. das Trocknen von Papier, das Schmelzen und Verkleben von Kunststoffen, das Enteisen von Tragflügeln an Flugzeugen usw.

### Bezugszeichenliste

- 1: Träger
- 2: Prallöffnung
- 3: Wandteil
- 4: Wanne
- 5: Kühlluft
- 6: Heissgas
- 7: Steg
- a: Grundstärke a von 3
- U: Rotationsachse
- D: Durchmesser der Wanne
- H: Höhe der Wanne
- R1: Radius der Wanne

- 16: Gasturbinenschaufel
- 17A,B,C: Einsatz
- 18: Hinterkante
- 20: Trägerabstand
- 21: Prallrohr
- 22: Einlauf
- 23: Mündung
- 25: Prallabstand
- 26: Senke
- 27: Zwischenraum

## Patentansprüche

1. Prallanordnung, bei welcher eine Mehrzahl von Prallöffnungen (2) flächenförmig in einem ebenen oder gekrümmten Träger (1) angeordnet ist, und der Träger (1) mit Abstand zu einem Wandteil (3) angeordnet ist, dessen zu kühlende oder aufzuheizende Prallfläche als Relief mit einer Anzahl nebeneinander angeordneter Wannen (4) ausgebildet ist, wobei mindestens ein Prallstrahl je Wanne (4) vorgesehen ist, welcher zumindest annähernd senkrecht auf den Wannenboden auftrifft, und die dem Prallstrahl abgekehrte Seite des Wandteils (3) zumindest annähernd eben ausgebildet ist, **dadurch gekennzeichnet, dass** die Wannen (4) die Querschnittsform eines Kreisabschnitts, einer Ellipse oder einer verkürzten Zykloide besitzen und entweder rotationssymmetrisch ausgebildet oder durch eine Verschiebung längs einer geraden Achse längserstreckt ausgebildet sind.

## Claims

1. Impingement arrangement, in which a plurality of impingement orifices (2) are arranged areally in a plane or curved carrier (1) and the carrier (1) is arranged at a distance from a wall part (3), whose impingement area, to be cooled or heated, is designed as a relief with a number of troughs (4) arranged next to one another, at least one impingement jet per trough (4) being provided, which impingement jet strikes the trough base at least approximately perpendicularly, and that side of the wall part (3) which is remote from the impingement jet being of at least roughly plane design, **characterized in that** the troughs (4) have the cross-sectional shape of a circle segment, of an ellipse or of a shortened cycloid and are of rotationally symmetrical or, by means of a displacement along a straight axis, longitudially extended design.

## Revendications

1. Ensemble de jets d'air, dans lequel une pluralité d'ouvertures à jets (2) est disposée en forme de surface dans un support plan ou courbe (1), et le support (1) est disposé à distance d'une partie de paroi (3), dont la face d'impact à refroidir ou à chauffer est configurée en relief avec un certain nombre de cuvettes (4) disposées les unes à côté des autres, dans lequel il est prévu par cuvette (4) au moins un jet, qui frappe le fond de la cuvette au moins à peu près perpendiculairement, et la face de la partie de paroi (3) située à l'opposé du jet est de forme au moins approximativement plane, **caractérisé en ce que** les cuvettes (4) possèdent une section transversale en forme de portion de cercle, d'ellipse ou de cycloïde raccourci et sont configurées soit avec la symétrie de révolution soit avec une forme allongée par déplacement le long d'un axe rectiligne.
